# FASCICULE DE BREVET EUROPEEN

(11) **EP 2 951 221 B1**
(45) Date de publication et mention de la délivrance du brevet: **11.04.2018**
(21) Numéro de dépôt: 14701988.9
(22) Date de dépôt: 28.01.2014
(51) Int. Cl.: C08G 4/00, C09D 161/12, C09J 161/12

(54) **COMPOSITION ADHESIVE AQUEUSE POUR LE COLLAGE DU BOIS**
WÄSSRIGE KLEBSTOFFZUSAMMENSETZUNG ZUM VERBINDEN VON HOLZ
AQUEOUS ADHESIVE COMPOSITION FOR THE BONDING OF WOOD

(30) Priorité: 29.01.2013 FR 1350716
(43) Date de publication de la demande: 09.12.2015
(73) Titulaire: Compagnie Générale des Etablissements Michelin, 63000 Clermont-Ferrand (FR)
(72) Inventeur: DOISNEAU, David, F-63040 Clermont-Ferrand Cedex 9 (FR)
(74) Mandataire: Desbordes, Guillaume
(86) Numéro de dépôt international: PCT/EP2014/051608
(87) Numéro de publication internationale: WO 2014/118163

(56) Documents cités:
- FR-A- 929 407
- US-A- 2 561 215
- US-A- 3 817 778

## Description

La présente invention concerne des compositions adhésives aqueuses destinées à faire adhérer des éléments de bois entre eux, l'utilisation et le procédé de fabrication d'une telle composition, le procédé d'assemblage des éléments de bois au moyen de ces compositions ainsi que les assemblages fabriqués à l'aide de ces compositions.

Il est connu de très longue date de coller deux éléments de bois entre eux à l'aide d'une composition adhésive aqueuse. On connait plusieurs types de compositions dont une composition de type phénol-aldéhyde comme décrite dans US2360376. Cette composition comprend une résine phénol-aldéhyde à base de formaldéhyde et de phénol. Le rapport molaire formaldéhyde sur phénol est compris dans un domaine de valeurs allant de 2 à 3,5.

On utilise cette composition dans un procédé de collage d'articles en contreplaqué comprenant plusieurs plis en bois. Au cours de ce procédé, on enduit un ou plusieurs plis d'une couche de la composition, on joint les plis les uns aux autres par l'intermédiaire de la couche de composition et on cuit sous pression les plis ainsi joints. L'assemblage collé ainsi obtenu présente une cohésion élevée grâce aux excellentes propriétés adhésives de la composition.

Toutefois, l'utilisation de formaldéhyde, qui plus est en excès pas rapport au phénol, entraine la libération de formaldéhyde non seulement lors de la cuisson sous pression mais également lors du stockage et de l'utilisation de l'assemblage collé. Or, en raison de l'évolution récente de la réglementation, notamment de la réglementation européenne sur ce type de composé, on souhaite limiter autant que possible, voire supprimer l'utilisation de formaldéhyde ou de précurseur de formaldéhyde.

L'invention a pour but de fournir une composition aqueuse adhésive pour le collage du bois présentant des propriétés adhésives élevées et dépourvue de formaldéhyde.

Or, au cours de leurs recherches, les Demanderesses ont découvert une composition adhésive aqueuse n'utilisant pas de formaldéhyde qui permet d'atteindre le but ci-dessus.

Ainsi, un premier objet de l'invention concerne une composition adhésive aqueuse comprenant:
- une résine phénol-aldéhyde à base :
   - d'au moins un polyaldéhyde aromatique porteur d'au moins deux fonctions aldéhydes, comprenant au moins un noyau aromatique, et
   - d'au moins un polyphénol, comportant un ou plusieurs noyau(x) aromatique(s), étant entendu que :
   - dans le cas d'un seul noyau aromatique, ce dernier est porteur de deux ou trois fonctions hydroxyle en position méta l'une par rapport à l'autre ou les unes par rapport aux autres, le reste du noyau aromatique étant non substitué,
   - dans le cas de plusieurs noyaux aromatiques, au moins deux d'entre eux sont chacun porteur de deux ou trois fonctions hydroxyle en position méta l'une par rapport à l'autre ou les unes par rapport aux autres, étant entendu que les deux positions en ortho d'au moins une de ces fonctions hydroxyle sont non substituées,
- moins de 16 % en masse de latex d'élastomère diénique insaturé.

Un autre objet de l'invention concerne l'utilisation d'une composition adhésive telle que définie ci-dessus pour le collage de deux éléments en bois.

L'invention concerne également un procédé de fabrication d'une composition adhésive aqueuse telle que définie ci-dessus dans lequel on mélange le polyphénol et le polyaldéhyde aromatique dans une solution aqueuse.

L'invention concerne également un procédé de collage de deux éléments en bois, dans lequel:
- on applique une couche de la composition adhésive aqueuse telle que définie ci-dessus sur au moins l'un des deux éléments en bois, et
- on joint les deux éléments de bois l'un à l'autre par l'intermédiaire de la couche de la composition adhésive aqueuse.

L'invention concerne également un assemblage collé de deux éléments en bois comprenant une couche de la composition adhésive aqueuse telle que définie ci-dessus joignant les deux éléments de bois l'un à l'autre.

L'invention ainsi que ses avantages seront aisément compris à la lumière de la description et des exemples de réalisation qui suivent.

### I - COMPOSITION ADHÉSIVE AQUEUSE DE L'INVENTION

Dans la présente description, sauf indication expresse différente, tous les pourcentages (%) indiqués sont des % en masse.

D'autre part, tout intervalle de valeurs désigné par l'expression "entre a et b" représente le domaine de valeurs allant de plus de a à moins de b (c'est-à-dire bornes a et b exclues) tandis que tout intervalle de valeurs désigné par l'expression "de a à b" signifie le domaine de valeurs allant de a jusqu'à b (c'est-à-dire incluant les bornes strictes a et b).

Par l'expression « composition à base de », il faut bien entendu comprendre une composition comportant le mélange et/ou le produit de réaction des différents constituants de base utilisés pour cette composition, certains d'entre eux pouvant être destinés à réagir ou susceptibles de réagir entre eux ou avec leur environnement chimique proche, au moins en partie, lors des différentes phases de fabrication de la composition, de l'assemblage, en particulier au cours d'une étape de cuisson, éventuellement sous pression.

### I.1 - Polyaldéhyde aromatique

Le premier constituant essentiel de la résine phénol-aldéhyde est un polyaldéhyde aromatique porteur d'au moins deux fonctions aldéhydes et comprenant au moins un noyau aromatique.

Préférentiellement, le noyau aromatique est porteur des deux fonctions aldéhydes, ces dernières pouvant être en position ortho, méta ou para sur le noyau aromatique.

Avantageusement, le noyau aromatique du polyaldéhyde aromatique est un noyau benzénique.

De préférence, le polyaldéhyde aromatique est choisi dans le groupe constitué par le 1,2-benzène-dicarboxaldéhyde, le 1,3-benzène-dicarboxaldéhyde, le 1,4-benzène-dicarboxaldéhyde, le 2-hydroxybenzène-1,3,5-tricarbaldéhyde, et les mélanges de ces composés.

Préférentiellement, le polyaldéhyde aromatique est choisi dans le groupe constitué par le 1,3-benzène-dicarboxaldéhyde, le 1,4-benzène-dicarboxaldéhyde et les mélanges de ces composés.

Encore plus préférentiellement le polyaldéhyde aromatique utilisé est le 1,4-benzène-dicarboxaldéhyde, encore appelé téréphtaldéhyde, pour rappel de formule chimique développée :

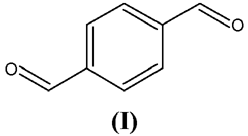

### I.2 - Polyphénol

Le deuxième constituant essentiel de la résine phénol-aldéhyde est un polyphénol comportant un ou plusieurs noyau(x) aromatique(s).

Dans le cas d'un polyphénol comportant un seul noyau aromatique, ce dernier est porteur de deux ou trois fonctions hydroxyle en position méta l'une par rapport à l'autre (dans le cas de deux fonctions) ou les unes par rapport aux autres (dans le cas de trois fonctions), le reste du noyau aromatique étant par définition non substitué ; on entend par là que les autres atomes de carbone du reste du noyau aromatique (ceux autres que les atomes de carbone porteurs des fonctions hydroxyle) sont porteurs d'un simple atome d'hydrogène.

De préférence, dans le cas d'un polyphénol comportant seul noyau aromatique, le noyau aromatique est un noyau benzénique.

A titre d'exemple préférentiel de polyphénol comportant un seul noyau aromatique, on peut citer en particulier le résorcinol, pour rappel de formule développée :

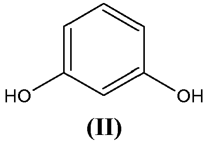

A titre d'exemple encore plus préférentiel comportant un seul noyau aromatique, on peut citer le phloroglucinol, pour rappel de formule développée :

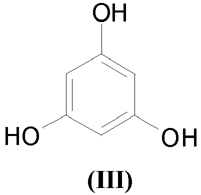

On notera que dans ces deux exemples **(II)** et **(III)** de polyphénol, le noyau aromatique est avantageusement un noyau benzénique. Dans d'autres modes de réalisation, le noyau aromatique est différent d'un noyau benzénique.

Dans le cas d'un polyphénol comportant plusieurs (deux ou plus de deux) noyaux aromatiques, au moins deux d'entre eux sont chacun porteur de deux ou trois fonctions hydroxyle en position méta l'une par rapport à l'autre (dans le cas de deux fonctions), ou les unes par rapport aux autres (dans le cas de trois fonctions), étant entendu que les deux positions en ortho d'au moins une de ces fonctions hydroxyle sont non substituées ; on entend par là que les deux atomes de carbone situés de part et d'autre (en position ortho) de l'atome de carbone hydroxylé (i.e., porteur de la fonction hydroxyle) sont porteurs d'un simple atome d'hydrogène.

De préférence, dans le cas d'un polyphénol comportant plusieurs noyaux aromatiques, chaque noyau porteur de deux ou trois fonctions hydroxyle en position méta l'une par rapport à l'autre ou les unes par rapport aux autres est un noyau benzénique.

A titres d'exemples préférentiels, dans le cas où la molécule de polyphénol comporte plusieurs noyaux aromatiques, au moins deux de ces noyaux aromatiques, identiques ou différents, sont choisis parmi ceux de formules générales : 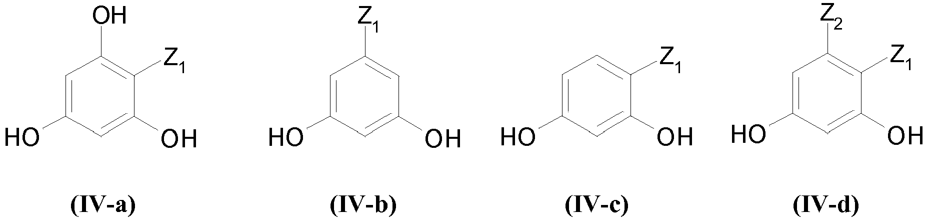 dans lesquelles les symboles Z₁, Z₂, identiques ou différents s'ils sont plusieurs sur le même noyau aromatique, représentent un atome (par exemple carbone, soufre ou oxygène) ou un groupe de liaison par définition au moins divalent, qui relie au moins ces deux noyaux aromatiques au reste de la molécule polyphénol.

Selon un mode de réalisation particulier et préférentiel de l'invention, le polyphénol est par exemple un flavonoïde, caractérisé pour rappel par une structure de base à 15 atomes de carbone, formée par deux cycles benzéniques reliés par trois atomes de carbone. Plus particulièrement, le flavonoïde utilisé est le 2',4',3, 5, 7-pentahydroxyflavone, appelé aussi « Morin », de formule **(V)** ci-après :

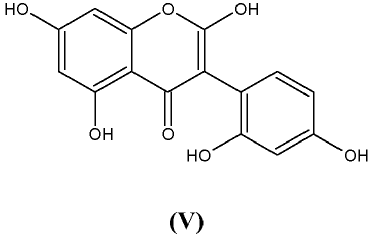

On note que ce composé est un polyphénol comportant deux noyaux aromatiques (de formules respectives **IV-c** et **IV-d** ci-dessus) dont chacun est bien porteur de deux fonctions hydroxyle en position méta l'une par rapport à l'autre, les deux positions en ortho d'au moins une de ces deux fonctions hydroxyle étant non substituées.

Selon un autre mode de réalisation particulier et préférentiel de l'invention, le polyphénol est par exemple le phloroglucide, encore appelé 2,4,6,3',5'-biphénylpentol, de formule développée suivante :

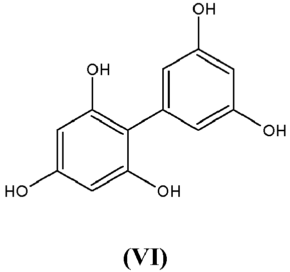

On note que ce composé est un polyphénol comportant deux noyaux aromatiques (de formules respectives **IV-a** et **IV-b** ci-dessus) dont chacun est bien porteur d'au moins deux (en l'occurrence, un porteur de deux, l'autre porteur de trois) fonctions hydroxyle en position méta l'une par rapport à l'autre, les deux positions en ortho d'au moins une de ces deux fonctions hydroxyle étant non substituées.

Selon encore un autre mode de réalisation particulier et préférentiel de l'invention, le polyphénol est par exemple le 2,2',4,4'-tétrahydroxydiphényl sulfide de formule développée suivante :

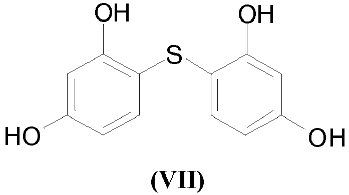

On notera que dans les exemples **(V)**, **(VI)** et **(VII)** qui comportent plusieurs noyaux aromatiques, chaque noyau porteur de deux ou trois fonctions hydroxyle en position méta l'une par rapport à l'autre ou les unes par rapport aux autres est un noyau benzénique. Dans d'autres modes de réalisation, le noyau aromatique est différent d'un noyau benzénique.

Dans un mode de réalisation préférentiel, le polyphénol est choisi dans le groupe constitué par le phloroglucinol **(III)**, le 2,2',4,4'-tétrahydroxydiphényl sulfide **(VII)** et les mélanges de ces composés.

### 1.3 - Latex d'élastomère diénique insaturé

La composition selon l'invention comprend moins de 16 % (valeur exclue) en masse de latex d'élastomère diénique insaturé. Par pourcentage en masse de la composition, on comprend le pourcentage en masse de la composition totale, c'est-à-dire masse de latex sur masse des constituants secs plus masse de l'eau.

De préférence, la composition comprend au plus 10 %, de préférence au plus 5 %, et plus préférentiellement au plus 1% en masse de latex d'élastomère diénique insaturé.

Les latex d'élastomère diénique insaturé (c'est-à-dire porteur de doubles liaisons carbone-carbone) sont bien connus de l'homme du métier. On rappelle qu'un latex est une dispersion stable de microparticules d'élastomère(s) en suspension dans une solution aqueuse.

L'élastomère diénique insaturé du latex présent dans une quantité inférieure à 16% en masse est préférentiellement choisi dans le groupe constitué par les polybutadiènes, les copolymères de butadiène, les polyisoprènes, les copolymères d'isoprène et les mélanges de ces élastomères. Il est encore plus préférentiellement choisi dans le groupe constitué par les copolymères de butadiène, les terpolymères vinylpyridine-styrène-butadiène, le caoutchouc naturel, et les mélanges de ces élastomères.

Par élastomère (ou indistinctement caoutchouc) "diénique", on entend un élastomère issu au moins en partie (c'est-à-dire un homopolymère ou un copolymère) de monomère(s) diène(s) (i.e., porteur(s) de deux doubles liaisons carbone-carbone, conjuguées ou non). Par "élastomère isoprénique", on entend un homopolymère ou un copolymère d'isoprène, en d'autres termes un élastomère diénique choisi dans le groupe constitué par le caoutchouc naturel (NR), les polyisoprènes de synthèse (IR), les différents copolymères d'isoprène et les mélanges de ces élastomères.

### 1.4 - Additifs

Dans un mode de réalisation, la composition comprend au moins une base. La base est par exemple l'ammoniaque, l'hydroxyde de sodium, de potassium ou d'ammonium.

La composition adhésive aqueuse peut bien entendu comporter tout ou partie des additifs habituels pour compositions adhésives aqueuses. On citera par exemple des colorants, charges, antioxydants ou autre stabilisants.

### II - PROCÉDÉ DE FABRICATION DE LA COMPOSITION ADHÉSIVE AQUEUSE DE L'INVENTION

Typiquement, lors d'une première étape de fabrication, on prépare une solution aqueuse en mélangeant progressivement de l'eau et une base. De préférence, la solution aqueuse présente un pH allant de 9 à 13, de préférence de 10 à 12.

Puis, on mélange le polyphénol à la solution aqueuse. Ensuite, on ajoute le polyaldéhyde aromatique. Le mélange ainsi formé est mis sous agitation pendant 1 à 30 min, par exemple 5 min à 20°C.

Dans le mode de réalisation dans lequel la composition comprend un ou plusieurs latex d'élastomère(s) diénique(s) insaturé(s) dans une quantité non nulle strictement inférieure à 16 %, la résine phénol-aldéhyde ainsi pré-condensée est généralement diluée dans l'eau, avant d'être ajoutée au latex ou aux latex. Dans le mode de réalisation dans lequel la composition comprend une quantité sensiblement nulle de latex d'élastomère diénique insaturé, on obtient directement la composition adhésive aqueuse.

La concentration de la composition peut être ajustée en fonction de son utilisation spécifique (temps d'ouverture, viscosité). La composition pourra être utilisée immédiatement ou bien stockée pendant un temps de maturation pouvant varier typiquement de une à plusieurs heures voire plusieurs jours, avant son utilisation finale.

### III - ASSEMBLAGE COLLÉ DE L'INVENTION

Comme indiqué précédemment, la présente invention concerne également l'utilisation de la composition adhésive aqueuse précédemment décrite pour le collage de deux éléments en bois.

Ainsi, un assemblage collé de deux éléments en bois selon l'invention comprend une couche de la composition adhésive aqueuse telle que décrite précédemment joignant les deux éléments de bois l'un à l'autre.

Par bois, on entend le tissu végétal issu de plantes ligneuses. Des exemples de tissu végétal sont le tronc, les branches et les racines. Par exemple, les plantes ligneuses dont sont issues le tissu végétal sont le chêne, le châtaignier, le frêne, le noyer, le hêtre, le peuplier, le sapin, le pin, l'olivier, l'aulne ou encore le bouleau.

Par élément, on entend toute particule ou morceau monolithique. Des exemples d'éléments sont des plis destinés à former un assemblage contreplaqué, des lattis destinés à former un assemblage latté, des particules telles que des copeaux, de la sciure, de la farine ou des flocons, pour former un assemblage aggloméré, que les particules soient orientées ou non, des fibres destinées à former un assemblage de fibres tel qu'un panneau haute ou moyenne densité, des morceaux de bois massif, également appelés bois d'oeuvre, destinés à former des assemblages tels que des meubles, des charpentes.

### IV - PROCÉDÉ DE FABRICATION DE L'ASSEMBLAGE COLLÉ DE L'INVENTION

L'assemblage collé de l'invention peut être préparé selon un procédé de collage de deux éléments en bois dans lequel :
- on applique une couche de la composition adhésive aqueuse telle que décrite précédemment sur au moins l'un des deux éléments en bois, et
- on joint les deux éléments de bois l'un à l'autre par l'intermédiaire de la couche de la composition adhésive aqueuse.

L'étape d'application de la composition adhésive sur l'un ou les éléments de bois peut être réalisée selon toute méthode appropriée, notamment par toute technique d'enduction connue telle que par exemple pulvérisation, imprégnation, injection sous pression ou encore par une combinaison d'une ou plusieurs de ces techniques.

On pourra préférentiellement utiliser un taux de composition adhésive aqueuse allant de 70 à 250 gr.m⁻².

Après l'étape d'application de la composition adhésive, l'assemblage collé est chauffé à une température allant de 30°C à 200°C, de préférence de 80°C à 160°C en fonctions des applications visées.

De préférence, l'assemblage collé est maintenu sous pression, par exemple sous une pression allant jusqu'à 18 kg.cm⁻². Plus préférentiellement, l'étape de maintien sous pression est réalisée simultanément avec l'étape de chauffage.

La durée de l'étape de chauffage et/ou de maintien sous pression varie de quelques minutes à quelques heures selon les cas, notamment en fonction du couple température-pression utilisé.

### V - EXEMPLES DE REALISATION DE L'INVENTION ET ESSAIS COMPARATIFS

Ces essais démontrent que l'adhésion entre plusieurs éléments de bois joints par l'intermédiaire d'une couche de composition adhésive aqueuse selon l'invention est sensiblement équivalente voire même améliorée dans certains cas, par rapport à l'adhésion obtenue avec une composition adhésive conventionnelle utilisant du formaldéhyde et du phénol.

Pour cela, plusieurs compositions adhésives aqueuses ont été préparées comme indiqué précédemment, plusieurs conformément à l'invention (notées ci-après C-2 à C-6) et une non conformément à l'invention (composition témoin notée ci-après C-1). Leurs formulations (exprimées en masse) sont présentées dans le tableau 1 annexé. Les quantités répertoriées dans ce tableau sont celles des constituants à l'état sec.

La composition C-1 est une composition témoin connue de l'état de la technique couramment utilisée pour le collage du bois. Cette composition adhésive est à base de formaldéhyde et de phénol.

Chaque composition C-2 à C-6 comprend un polyaldéhyde aromatique comprenant au moins un noyau aromatique porteur d'au moins deux fonctions aldéhydes. En l'espèce, le noyau aromatique est un noyau benzénique.

Le polyaldéhyde aromatique des compositions C-2 à C-6 est choisi dans le groupe constitué par le 1,2-benzène-dicarboxaldéhyde, le 1,3-benzène-dicarboxaldéhyde, le 1,4-benzène-dicarboxaldéhyde, le 2-hydroxybenzène-1,3,5-tricarbaldéhyde et les mélanges de ces composés.

Le polyaldéhyde aromatique des compositions C-2 à C-5 est choisi dans le groupe constitué par le 1,3-benzène-dicarboxaldéhyde, le 1,4-benzène-dicarboxaldéhyde et les mélanges de ces composés.

Le polyaldéhyde aromatique des compositions C-2 à C-4 est le 1,4-benzène-dicarboxaldéhyde. Le polyaldéhyde aromatique de la composition C-5 est le 1,3-benzène-dicarboxaldéhyde. Le polyaldéhyde aromatique de la composition C-6 est le 1,2-benzène-dicarboxaldéhyde.

Chaque composition C-2, C-4 et C-5 comprend un polyphénol comprenant un noyau aromatique porteur de deux ou trois fonctions hydroxyle en position méta l'une par rapport à l'autre ou les unes par rapport aux autres, le reste du noyau aromatique étant non substitué. En l'espèce, le noyau aromatique est un noyau benzénique.

Le polyphénol de chaque composition C-2 et C-5 est le phloroglucinol. Le polyphénol de la composition C-4 est le résorcinol.

Chaque composition C-3 et C-6 comprend un polyphénol comprenant plusieurs noyaux aromatiques dont au moins deux d'entre eux sont chacun porteur de deux ou trois fonctions hydroxyle en position méta l'une par rapport à l'autre ou les unes par rapport aux autres, étant entendu que les deux positions en ortho d'au moins une de ces fonctions hydroxyle sont non substituées. En l'espèce, chaque noyau porteur de deux ou trois fonctions hydroxyle en position méta l'une par rapport à l'autre ou les unes par rapport aux autres est un noyau benzénique.

Le polyphénol des compositions C-3 et C-6 est le 2,2',4,4'-tétrahydroxydiphényl sulfide.

Chaque composition adhésive C-1 à C-6 comprend par ailleurs moins de 16 % (valeur exclue) en masse de latex d'élastomère diénique insaturé. Ainsi, chaque compositions adhésive C-1 à C-6 comprend au plus 10 %, de préférence au plus 5 %, et plus préférentiellement au plus 1% en masse de latex d'élastomère diénique insaturé. Ici, le taux massique de latex d'élastomère diénique insaturé est sensiblement nul.

Chaque composition adhésive C-1 à C-6 comprend une base, ici de l'hydroxyde de sodium.

La qualité de la liaison entre les éléments de bois est déterminée par un test dans lequel on mesure la force nécessaire pour séparer deux éléments de bois l'un de l'autre par destruction de la couche joignant les deux éléments.

Plus précisément, chaque éprouvette de test comprend deux éléments de bois, en l'espèce du hêtre de masse volumique égale à 0,83 g.cm⁻³, présentant chacun une forme générale parallélépipédique de dimensions 70 cm x 25 mm x 3 mm. Sur chaque extrémité des éléments, on applique une couche de la composition adhésive aqueuse sur toute la largeur de l'élément, ici 25 mm et sur une longueur de 1 cm. Puis, on joint les deux éléments par l'intermédiaire des couches de composition appliquées sur chaque élément de bois. La surface totale encollée de l'éprouvette formée par les deux éléments de bois est donc de 5 cm². La composition de l'éprouvette ainsi formée est cuite pendant 3 heures à 140 °C.

A l'issue de la cuisson, l'éprouvette ainsi constituée des deux éléments joints par collage est mise en place dans les mâchoires d'une machine de traction, puis tractée à une vitesse et une température données (par exemple, dans le cas présent, à 10 mm/min et 20°C).

On caractérise les niveaux d'adhésion en mesurant la force dite d'arrachage (notée Fₘₐₓ) pour disjoindre les deux éléments l'un de l'autre via une cassure de la couche de collage. Une valeur supérieure à celle de l'éprouvette témoin, arbitrairement fixée à 100, indique un résultat amélioré, c'est-à-dire une force d'arrachage supérieure à celle de l'éprouvette témoin. Les résultats des tests effectués sur les éprouvettes sont résumés dans le tableau 1.

On constate que l'assemblage collé avec les compositions adhésives C-2, C-3 et C-5 selon l'invention présentent une force d'arrachage Fₘₐₓ particulièrement élevée et inattendue pour l'homme du métier, puisque très sensiblement augmentée (entre 22% et 27 %) par rapport à la force d'arrachage de référence mesurée sur l'assemblage collé témoin avec la composition C-1. Quant aux assemblages collés avec les compositions C-4 et C-6, ils présentent une force d'arrachage Fₘₐₓ certes inférieure à celle de la composition C-1, mais tout à fait suffisante pour assurer un collage efficace des éléments de bois.

Contrairement à des polyaldéhydes aliphatiques, le polyaldéhyde aromatique de la composition reste stable du fait de la relative désactivation du noyau aromatique par les fonctions aldéhydes. Cette relative désactivation du noyau aromatique est compensée par la réactivité importante du polyphénol. En effet, les deux ou trois fonctions hydroxyle portées par le ou les noyaux aromatiques du polyphénol sont disposées en position méta l'une par rapport à l'autre ou les unes par rapport aux autres ce qui rend le polyphénol particulièrement réactif par double activation des positions ortho non substituées.

En conclusion, les résultats de ces différents essais démontrent clairement que les compositions adhésives selon l'invention constituent une alternative intéressante à l'emploi des compositions adhésives conventionnelles et ce, sans l'utilisation de formaldéhyde.

**Tableau 1**

| **Compositions adhésives** | **C-1** | **C-2** | **C-3** | **C-4** | **C-5** | **C-6** |
|---|---|---|---|---|---|---|
| **Aldéhyde** | | | | | | |
| Formaldéhyde (1) | 0.75 | | | - | - | - |
| 1,4-benzènedicarboxaldéhyde (2) | - | 3,35 | 3,35 | 3,35 | - | - |
| 1,3-benzènedicarboxaldéhyde (3) | | - | - | - | 3,35 | - |
| 1,2-benzènedicarboxaldéhyde (4) | | | - | - | - | 3,35 |

| **Polyphénol** | | | | | | |
|---|---|---|---|---|---|---|
| Phénol (5) | 4,7 | | | | | |
| Résorcinol (6) | - | - | - | 5,5 | - | - |
| Phloroglucinol (7) | - | 6,3 | - | - | 6,3 | - |
| 2,2',4,4'-tétrahydroxydiphényl sulfide (8) | - | - | 11,7 | - | - | 11,7 |

| **Base** | | | | | | |
|---|---|---|---|---|---|---|
| Hydroxyde de sodium (9) | 1,5 | 1.5 | 1,5 | 2 | 2 | 2 |
| | | | | | | |
| Poids total d'extrait sec de composition adhésive | 14,6 | 14,6 | 14,6 | 14,6 | 14,6 | 14,6 |
| Poids d'eau | 5,4 | 5,4 | 5,4 | 5,4 | 5,4 | 5,4 |
| | | | | | | |

| **Tests d'adhésion** | | | | | | |
|---|---|---|---|---|---|---|
| Fₘₐₓ à 20°C | 100 | 122 | 127 | 97 | 123 | 91 |

| | | | | | | |
|---|---|---|---|---|---|---|
| (1) Formol (de la société Caldic ; dilué à 36%) (2) 1,4-benzènedicarboxaldéhyde (de la société ABCR ; de pureté 98%) (3) 1,3-benzènedicarboxaldéhyde (de la société ABCR ; de pureté 98%) (4) 1,2-benzènedicarboxaldéhyde (de la société ABCR ; de pureté 98%) (5) Phénol (de la société Aldrich, de pureté 99%) (6) Résorcinol (de la société Sumitomo ; de pureté 99.5%) (7) Phloroglucinol (de la société Alfa Aesar ; de pureté 99%) (8) 2,2',4,4'-tétrahydroxydiphényl sulfide (de la société Alfa Aesar ; de pureté 98%) (9) Hydroxyde de sodium (de la société Aldrich ; dilué à 30%) | | | | | | |

## Revendications

1. Composition adhésive aqueuse, **caractérisée en ce qu'**elle comprend:
- une résine phénol-aldéhyde à base :
- d'au moins un polyaldéhyde aromatique porteur d'au moins deux fonctions aldéhydes, comprenant au moins un noyau aromatique, et
- d'au moins un polyphénol, comportant un ou plusieurs noyau(x) aromatique(s), étant entendu que :
dans le cas d'un seul noyau aromatique, ce dernier est porteur de deux ou trois fonctions hydroxyle en position méta l'une par rapport à l'autre ou les unes par rapport aux autres, le reste du noyau aromatique étant non substitué,
dans le cas de plusieurs noyaux aromatiques, au moins deux d'entre eux sont chacun porteur de deux ou trois fonctions hydroxyle en position méta l'une par rapport à l'autre ou les unes par rapport aux autres, étant entendu que les deux positions en ortho d'au moins une de ces fonctions hydroxyle sont non substituées,
- moins de 16 % en masse de latex d'élastomère diénique insaturé.

2. Composition selon la revendication précédente, comprenant au plus 10 %, de préférence au plus 5 %, et plus préférentiellement au plus 1% en masse de latex d'élastomère diénique insaturé.

3. Composition selon l'une quelconque des revendications précédentes, dans laquelle le noyau aromatique du polyaldéhyde aromatique est porteur des deux fonctions aldéhydes.

4. Composition selon l'une quelconque des revendications précédentes, dans laquelle le noyau aromatique du polyaldéhyde aromatique est un noyau benzénique.

5. Composition selon l'une quelconque des revendications précédentes, dans laquelle le polyaldéhyde aromatique est choisi dans le groupe constitué par le 1,2-benzène-dicarboxaldéhyde, le 1,3-benzène-dicarboxaldéhyde, le 1,4-benzène-dicarboxaldéhyde, le 2-hydroxybenzène-1,3,5-tricarbaldéhyde et les mélanges de ces composés.

6. Composition selon la revendication précédente, dans laquelle le polyaldéhyde aromatique est choisi dans le groupe constitué par le 1,3-benzène-dicarboxaldéhyde, le 1,4-benzène-dicarboxaldéhyde et les mélanges de ces composés.

7. Composition selon la revendication précédente, dans laquelle le polyaldéhyde aromatique est le 1,4-benzène-dicarboxaldéhyde.

8. Composition selon l'une quelconque des revendications précédentes, dans laquelle dans le cas d'un polyphénol comportant un seul noyau aromatique, le noyau aromatique est un noyau benzénique.

9. Composition selon l'une quelconque des revendications précédentes, dans laquelle dans le cas d'un polyphénol comportant plusieurs noyaux aromatiques, chaque noyau porteur de deux ou trois fonctions hydroxyle en position méta l'une par rapport à l'autre ou les unes par rapport aux autres est un noyau benzénique.

10. Composition selon l'une quelconque des revendications précédentes, dans laquelle le polyphénol est choisi dans le groupe constitué par le phloroglucinol, le 2,2',4,4'-tétrahydroxydiphényl sulfide et les mélanges de ces composés.

11. Utilisation d'une composition adhésive comprenant une résine phénol-aldéhyde à base :
- d'au moins un polyaldéhyde aromatique porteur d'au moins deux fonctions aldéhydes, comprenant au moins un noyau aromatique, et
- d'au moins un polyphénol, comportant un ou plusieurs noyau(x) aromatique(s), étant entendu que :
dans le cas d'un seul noyau aromatique, ce dernier est porteur de deux ou trois fonctions hydroxyle en position méta l'une par rapport à l'autre ou les unes par rapport aux autres, le reste du noyau aromatique étant non substitué,
dans le cas de plusieurs noyaux aromatiques, au moins deux d'entre eux sont chacun porteur de deux ou trois fonctions hydroxyle en position méta l'une par rapport à l'autre ou les unes par rapport aux autres, étant entendu que les deux positions en ortho d'au moins une de ces fonctions hydroxyle sont non substituées,
- moins de 16 % en masse de latex d'élastomère diénique insaturé,
pour le collage de deux éléments en bois.

12. Procédé de fabrication d'une composition adhésive aqueuse selon l'une quelconque des revendications 1 à 10 dans lequel on mélange le polyphénol et le polyaldéhyde aromatique dans une solution aqueuse.

13. Procédé selon la revendication précédente, dans lequel la solution aqueuse présente un pH allant de 9 à 13, de préférence de 10 à 12.

14. Procédé de collage de deux éléments en bois, dans lequel:
- on applique une couche de la composition adhésive aqueuse selon l'une quelconque des revendications 1 à 10 sur au moins l'un des deux éléments en bois, et
- on joint les deux éléments de bois l'un à l'autre par l'intermédiaire de la couche de la composition adhésive aqueuse.

15. Assemblage collé de deux éléments en bois comprenant une couche de la composition adhésive aqueuse selon l'une quelconque des revendications 1 à 10 joignant les deux éléments de bois l'un à l'autre.

## Patentansprüche

1. Wässrige Klebstoffzusammensetzung, **dadurch gekennzeichnet, dass** sie Folgendes umfasst:
- ein Phenol-Aldehyd-Harz auf Basis:
- von mindestens einem aromatischen Polyaldehyd mit mindestens zwei Aldehydfunktionen und mindestens einem aromatischen Kern und
- von mindestens einem Polyphenol mit einem oder mehreren aromatischen Kernen, mit der Maßgabe, dass:
im Fall eines einzigen aromatischen Kerns letzterer zwei oder drei Hydroxylfunktionen in meta-Position zueinander trägt, wobei der aromatische Rest unsubstituiert ist,
im Fall mehrerer aromatischer Kerne mindestens zwei davon jeweils zwei oder drei Hydroxylfunktionen in meta-Position zueinander tragen, mit der Maßgabe, dass die beiden zu mindestens einer dieser Hydroxylfunktionen ortho-ständigen Positionen unsubstituiert sind,
- weniger als 16 Gew.-% Latex von ungesättigtem Dienelastomer.

2. Zusammensetzung nach dem vorhergehenden Anspruch, umfassend höchstens 10 Gew.-%, vorzugsweise höchstens 5 Gew.-% und weiter bevorzugt höchstens 1 Gew.-% Latex von ungesättigtem Dienelastomer.

3. Zusammensetzung nach einem der vorhergehenden Ansprüche, wobei der aromatische Kern des aromatischen Polyaldehyds zwei Aldehydfunktionen trägt.

4. Zusammensetzung nach einem der vorhergehenden Ansprüche, wobei es sich bei dem aromatischen Kern des aromatischen Polyaldehyds um einen Benzolkern handelt.

5. Zusammensetzung nach einem der vorhergehenden Ansprüche, wobei der aromatische Polyaldehyd aus der Gruppe bestehend aus 1,2-Benzoldicarboxaldehyd, 1,3-Benzoldicarboxaldehyd, 1,4-Benzoldicarboxaldehyd, 2-Hydroxybenzol-1,3,5-tricarbaldehyd und Mischungen dieser Verbindungen ausgewählt ist.

6. Zusammensetzung nach dem vorhergehenden Anspruch, wobei der aromatische Polyaldehyd aus der Gruppe bestehend aus 1,3-Benzoldicarboxaldehyd, 1,4-Benzoldicarboxaldehyd und Mischungen dieser Verbindungen ausgewählt ist.

7. Zusammensetzung nach dem vorhergehenden Anspruch, wobei es sich bei dem aromatischen Polyaldehyd um 1,4-Benzoldicarboxaldehyd handelt.

8. Zusammensetzung nach einem der vorhergehenden Ansprüche, wobei es sich im Fall eines Polyphenols mit einem einzigen aromatischen Kern bei dem aromatischen Kern um einen Benzolkern handelt.

9. Zusammensetzung nach einem der vorhergehenden Ansprüche, wobei es sich im Fall eines Polyphenols mit mehreren aromatischen Kernen bei jedem Kern, der zwei oder drei Hydroxylfunktionen in meta-Position zueinander trägt, um einen Benzolkern handelt.

10. Zusammensetzung nach einem der vorhergehenden Ansprüche, wobei das Polyphenol aus der Gruppe bestehend aus Phloroglucinol, 2,2',4,4'-Tetrahydroxydiphenylsulfid und Mischungen dieser Verbindungen ausgewählt ist.

11. Verwendung einer Klebstoffzusammensetzung, umfassend ein Phenol-Aldehyd-Harz auf Basis:
- von mindestens einem aromatischen Polyaldehyd mit mindestens zwei Aldehydfunktionen und mindestens einem aromatischen Kern und
- von mindestens einem Polyphenol mit einem oder mehreren aromatischen Kernen, mit der Maßgabe, dass:
im Fall eines einzigen aromatischen Kerns letzterer zwei oder drei Hydroxylfunktionen in meta-Position zueinander trägt, wobei der aromatische Rest unsubstituiert ist,
im Fall mehrerer aromatischer Kerne mindestens zwei davon jeweils zwei oder drei Hydroxylfunktionen in meta-Position zueinander tragen, mit der Maßgabe, dass die beiden zu mindestens einer dieser Hydroxylfunktionen ortho-ständigen Positionen unsubstituiert sind,
- weniger als 16 Gew.-% Latex von ungesättigtem Dienelastomer,
zum Verkleben von zwei Holzelementen.

12. Verfahren zur Herstellung einer wässrigen Klebstoffzusammensetzung nach einem der Ansprüche 1 bis 10, bei dem man das Polyphenol und den aromatischen Polyaldehyd in einer wässrigen Lösung mischt.

13. Verfahren nach dem vorhergehenden Anspruch, bei dem die wässrige Lösung einen pH-Wert im Bereich von 9 bis 13, vorzugsweise von 10 bis 12, aufweist.

14. Verfahren zum Verkleben von zwei Holzelementen, bei dem man:
- auf mindestens eines der beiden Holzelemente eine Schicht der wässrigen Klebstoffzusammensetzung nach einem der Ansprüche 1 bis 10 aufbringt und
- die beiden Holzelemente über die Schicht der wässrigen Klebstoffzusammensetzung miteinander verbindet.

15. Klebverbund aus zwei Holzelementen, umfassend eine Schicht der wässrigen Klebstoffzusammensetzung nach einem der Ansprüche 1 bis 10, die die beiden Holzelemente miteinander verbindet.

## Claims

1. Aqueous adhesive composition, **characterized in that** it comprises:
- a phenol/aldehyde resin based:
- on at least one aromatic polyaldehyde bearing at least two aldehyde functional groups and comprising at least one aromatic nucleus, and
- on at least one polyphenol, comprising one or more aromatic nucleus/nuclei, it being understood that: in the case of just one aromatic nucleus, the latter bears two or three hydroxyl functional groups in the meta position with respect to each other or with respect to one another, the remainder of the aromatic nucleus being unsubstituted,
in the case of several aromatic nuclei, at least two of them each bear two or three hydroxyl functional groups in the meta position with respect to each other or with respect to one another, it being understood that the two positions ortho to at least one of these hydroxyl functional groups are unsubstituted,
- less than 16% by weight of unsaturated diene elastomer latex.

2. Composition according to the preceding claim, comprising at most 10%, preferably at most 5% and more preferably at most 1% by weight of unsaturated diene elastomer latex.

3. Composition according to either one of the preceding claims, in which the aromatic nucleus of the aromatic polyaldehyde bears two aldehyde functional groups.

4. Composition according to any one of the preceding claims, in which the aromatic nucleus of the aromatic polyaldehyde is a benzene nucleus.

5. Composition according to any one of the preceding claims, in which the aromatic polyaldehyde is selected from the group consisting of 1,2-benzenedicarboxaldehyde, 1,3-benzenedicarboxaldehyde, 1,4-benzenedicarboxaldehyde, 2-hydroxybenzene-1,3,5-tricarbaldehyde and the mixtures of these compounds.

6. Composition according to the preceding claim, in which the aromatic polyaldehyde is selected from the group consisting of 1,3-benzenedicarboxaldehyde, 1,4-benzenedicarboxaldehyde and the mixtures of these compounds.

7. Composition according to the preceding claim, in which the aromatic polyaldehyde is 1,4-benzenedicarboxaldehyde.

8. Composition according to any one of the preceding claims, in which, in the case of a polyphenol comprising just one aromatic nucleus, the aromatic nucleus is a benzene nucleus.

9. Composition according to any one of the preceding claims, in which, in the case of a polyphenol comprising several aromatic nuclei, each nucleus bearing two or three hydroxyl functional groups in the meta position with respect to each other or with respect to one another is a benzene nucleus.

10. Composition according to any one of the preceding claims, in which the polyphenol is selected from the group consisting of phloroglucinol, 2,2',4,4'-tetrahydroxydiphenyl sulphide and the mixtures of these compounds.

11. Use of an adhesive composition comprising a phenol/aldehyde resin base:
- on at least one aromatic polyaldehyde bearing at least two aldehyde functional groups and comprising at least one aromatic nucleus, and
- on at least one polyphenol, comprising one or more aromatic nucleus/nuclei, it being understood that:
in the case of just one aromatic nucleus, the latter bears two or three hydroxyl functional groups in the meta position with respect to each other or with respect to one another, the remainder of the aromatic nucleus being unsubstituted,
in the case of several aromatic nuclei, at least two of them each bear two or three hydroxyl functional groups in the meta position with respect to each other or with respect to one another, it being understood that the two positions ortho to at least one of these hydroxyl functional groups are unsubstituted,
- less than 16% by weight of unsaturated diene elastomer latex, for the adhesive bonding of two wood elements.

12. Process for the manufacture of an aqueous adhesive composition according to any one of Claims 1 to 10 in which the polyphenol and the aromatic polyaldehyde are mixed in an aqueous solution.

13. Process according to the preceding claim, in which the aqueous solution exhibits a pH ranging from 9 to 13, preferably from 10 to 12.

14. Process for the adhesive bonding of two wood elements, in which:
- a layer of the aqueous adhesive composition according to any one of Claims 1 to 10 is applied to at least one of the two wood elements, and
- the two wood elements are joined to one another via the layer of the aqueous adhesive composition.

15. Adhesively-bonded assemblage of two wood elements comprising a layer of the aqueous adhesive composition according to any one of Claims 1 to 10 joining the two wood elements to each other.
